(19) Europäisches Patentamt
European Patent Office
Office européen des brevets

(11) **EP 4 096 087 A1**

(12) **EUROPÄISCHE PATENTANMELDUNG**

(43) Veröffentlichungstag:
**30.11.2022 Patentblatt 2022/48**

(21) Anmeldenummer: **21176289.3**

(22) Anmeldetag: **27.05.2021**

(51) Internationale Patentklassifikation (IPC):
**H02P 6/17** (2016.01)     **H02P 23/00** (2016.01)

(52) Gemeinsame Patentklassifikation (CPC):
**H02P 6/17; B25F 5/00; H02P 23/0077**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Engler, Torsten**
**82211 Herrsching (DE)**
• **Herzig, Michael**
**86899 Landsberg (DE)**

(74) Vertreter: **Hilti Aktiengesellschaft**
**Corporate Intellectual Property**
**Feldkircherstrasse 100**
**Postfach 333**
**9494 Schaan (LI)**

(54) **ELEKTRISCHE ANTRIEBSEINHEIT FÜR EINE HANDWERKZEUGMASCHINE**

(57)     Elektrische Antriebseinheit mit einem bürstenlosen Gleichstrommotor und mit einer Schaltbrücke zur sensorgesteuerten Kommutierung des Gleichstrommotors mittels wenigstens eines vom Gleichstrommotor umfassten Hallsensors, wobei der Hallsensor mit der Schaltbrücke verbunden und eingerichtet ist, einen Drehwinkel des Gleichstrommotors zu erfassen, und wobei die Antriebseinheit weiter eine mit der Schaltbrücke verbundene Steuereinheit aufweist, mittels der eine Soll-Drehzahl für den Gleichstrommotor vorgegeben werden kann, wobei die Steuereinheit eingerichtet ist, drehwinkelabhängige Hall-Interrupts, die durch den wenigsten einen Hallsensor bewirkt werden, zu verarbeiten und auf Basis von drehwinkelunabhängigen Zeit-Interrupts und den drehwinkelabhängigen Hall-Interrupts eine Ist-Drehzahl des Gleichstrommotors zu ermitteln

Fig. 1

**Beschreibung**

Die vorliegende Erfindung betrifft eine elektrische Antriebseinheit mit einem bürstenlosen Gleichstrommotor und mit einer Schaltbrücke zur sensorgesteuerten Kommutierung des Gleichstrommotors mittels wenigstens eines vom Gleichstrommotor umfassten Hallsensors, wobei der Hallsensor mit der Schaltbrücke verbunden und eingerichtet ist, einen Drehwinkel des Gleichstrommotors zu erfassen. Die Antriebseinheit weist weiter eine mit der Schaltbrücke verbundene Steuereinheit aufweist, mittels der eine Soll-Drehzahl für den Gleichstrommotor vorgegeben werden kann.

Die vorliegende Erfindung betrifft ebenfalls ein Verfahren zum Bestimmen der Ist-Drehzahl eines bürstenlosen Gleichstrommotors einer elektrischen Antriebseinheit, wobei die Antriebseinheit ausgestattet ist mit einem bürstenlosen Gleichstrommotor und mit einer Schaltbrücke zur sensorgesteuerten Kommutierung des Gleichstrommotors mittels wenigstens eines vom Gleichstrommotor umfassten Hallsensors, wobei der Hallsensor mit der Schaltbrücke verbunden und eingerichtet ist, einen Drehwinkel des Gleichstrommotors zu erfassen, und wobei die Antriebseinheit weiter eine mit der Schaltbrücke verbundene Steuereinheit aufweist, mittels der eine Soll-Drehzahl für den Gleichstrommotor vorgegeben werden kann.

Antriebseinheiten der eingangs genannter Art sind grundsätzlich aus dem Stand der Technik bekannt, und kommen beispielsweise in elektrischen Handwerkzeugmaschinen, beispielsweise Akkuschraubern, Bohrhämmern, oder Kombihämmern zum Einsatz. Bürstenlose Gleichstrommotoren werden typischerweise als BLDC-Motoren bezeichnet und mittels einer Schaltbrücke kommutiert. Im Rahmen der sensorgesteuerten Kommutierung erfolgt dies unter Verwendung wenigstens eines Hallsensors, dessen Signal die Schaltbrücke steuert.

Es ist Aufgabe der vorliegenden Erfindung eine Antriebseinheit anzugeben, die eine Grundlage für eine präzise Drehzahlregelung des bürstenlosen Gleichstrommotor schafft.

Bezüglich der Antriebseinheit wird die Aufgabe dadurch gelöst, dass die Steuereinheit eingerichtet ist, drehwinkelabhängige Hall-Interrupts, die durch den wenigsten einen Hallsensor bewirkt werden, zu verarbeiten und auf Basis von drehwinkelunabhängigen Zeit-Interrupts und den drehwinkelabhängigen Hall-Interrupts eine Ist-Drehzahl des Gleichstrommotors zu ermitteln.

In einer besonders bevorzugten Ausgestaltung ist der Gleichstrommotor als 3-phasiger Gleichstrommotor mit 3 Hallsensoren ausgebildet.

Die Erfindung schließt die Erkenntnis ein, dass eine präzise Ermittlung der Ist-Drehzahl von Gleichstrommotoren, insbesondere im Bezug auf elektrische Handwerkzeugmaschinen, im Stand der Technik noch nicht zufriedenstellend gelöst ist. Die erfindungsgemäße elektrische Antriebseinheit schafft eine Grundlage für eine solche präzise Ermittlung der Ist-Drehzahl, insbesondere bei niedrigen Drehzahlen des Gleichstrommotors.

In einer weiteren besonders bevorzugten Ausgestaltung ist die Steuereinheit ausgebildet, zu zählen, wie viele der Hall-Interrupts in einem Takt-Zeitraum, der durch zwei aufeinander folgende Zeit-Interrupts definiert ist, auftreten. Es hat sich als vorteilhaft herausgestellt, wenn die ermittelte Ist-Drehzahl des Gleichstrommotors dem Quotienten aus gezählten Hall-Interrupts, die den Drehwinkel repräsentieren, und dem Takt-Zeitraum entspricht.

In einer weiteren besonders bevorzugten Ausgestaltung ist die Steuereinheit ausgebildet, jeweils einen Offset-Zeitraum zwischen demjenigen Hall-Interrupt, der einem Zeit-Interrupt unmittelbar zeitlich nacheilt, und diesem Zeit-Interrupt zu bestimmen. Alternativ kann die Steuereinheit ausgebildet sein, jeweils einen Offset-Zeitraum zwischen demjenigen Hall-Interrupt, der einem Zeit-Interrupt unmittelbar zeitlich vorauseilt, und diesem Zeit-Interrupt zu bestimmen.

In einer besonders bevorzugten Ausgestaltung ist die Steuereinheit ausgebildet ist, den Takt-Zeitraum durch den Offset-Zeitraum zeitlich zu korrigieren. Es hat sich als vorteilhaft herausgestellt, wenn die Steuereinheit ausgebildet ist, den Takt-Zeitraum zusätzlich durch den jeweils vorangehenden Offset-Zeitraum zu korrigieren. Ein korrigierter Takt-Zeitraum kann als Bezugszeitraum bezeichnet werden. Es hat sich als vorteilhaft herausgestellt, wenn der Offset-Zeitraum und/oder der vorangehenden Offset-Zeitraum in der Steuereinheit eingespeichert und/oder aus der Steuereinheit ausgelesen werden kann.

In einer weiteren besonders bevorzugten Ausgestaltung ist die Steuereinheit ausgebildet ist, die ermittelte Drehzahl des Gleichstrommotors als Quotient von einem konstanten motorspezifischen Sektorwinkel und dem Offset-Zeitraum festzulegen, falls der jeweilige Takt-Zeitraum frei von einem Hall-Interrupt ist.

Es hat sich als vorteilhaft herausgestellt, wenn der Zeit-Interrupt eine konstante Taktfrequenz aufweist. In einer besonders bevorzugten Ausgestaltung liegt die Taktfrequenz des Zeit-Interrupts zwischen 0,5 kHz und 1,5 kHz. Es hat sich als vorteilhaft herausgestellt, wenn die Taktfrequenz des Zeit-Interrupts 1 kHz beträgt, d.h. dass in dem Steuergerät jede Millisekunde ein Zeit-Interrupt erzeugt wird.

Es hat sich ebenfalls als vorteilhaft herausgestellt, wenn die Steuereinheit ausgebildet ist, zunächst Offset-Zeitraum zu messen und/oder zu korrigieren und danach die drehwinkelabhängigen Hall-Interrupts zu verarbeiten. In einer weiteren besonders bevorzugten Ausgestaltung ist vorgesehen, dass alle Interrupts während eines Speicherlesevorgangs, beispielsweise zum Auslesen eines Offset-Zeitraums und/oder eines vorangehenden Offset-Zeitraums aus der Steuereinheit, deaktiviert sind.

In einer weiteren besonders bevorzugten Ausgestaltung ist vorgesehen, dass ein auftretender Hall-Interrupt höher priorisiert wird als der Speicherlesevorgang. Es hat sich als vorteilhaft herausgestellt, wenn auftretender Hall-Interrupt den Speicherlesevorgang unterbricht. In einer weiteren besonders bevorzugten Ausgestaltung ist die Steuereinheit ausgebildet, eine Verzögerung, die durch einen den Speicherlesevorgang unterbrechenden Hall-Interrupt entsteht, zu messen und/oder zu kompensieren. In einer weiteren besonders bevorzugten Ausgestaltung ist die Steuereinheit ausgebildet, mittels eines den Hall-Interrupts zugeordneten Speicherregister einen etwaig unberücksichtigten Schaltvorgang in der Schaltbrücke zu detektieren und bedarfsweise eine Bestimmung des Offset-Zeitraums zu wiederholen und/oder zu kompensieren.

In einer weiteren besonders bevorzugten Ausgestaltung ist die Steuereinheit zur Blockkommutierung des Gleichstrommotors ausgebildet. Die Steuereinheit kann als Integrierter Chip, beispielsweise als ASIC oder dergleichen bereitgestellt sein. Es hat sich als vorteilhaft herausgestellt, wenn die Antriebseinheit als Akkuschrauber, Bohrhammer oder Kombihammer bereitgestellt ist.

Bezüglich des Verfahrens wird die Aufgabe dadurch gelöst, dass die Ist-Drehzahl des Gleichstrommotors auf Basis von drehwinkelunabhängigen Zeit-Interrupts und drehwinkelabhängigen Hall-Interrupts ermittelt wird, wobei die Steuereinheit eingerichtet ist, die drehwinkelabhängige Hall-Interrupts, die durch den wenigsten einen Hallsensor bewirkt werden, zu verarbeiten. Das Erfindungsgemäße Verfahren kann durch die mit Bezug auf die Antriebseinheit beschriebenen Merkmal in entsprechender Weise weitergebildet sein, und umgekehrt. Ist beispielsweise bezüglich der Antriebseinheit beschrieben, dass die Steuereinheit ausgebildet ist, den Takt-Zeitraum durch den Offset-Zeitraum zeitlich zu korrigieren, so ist ein entsprechendes Verfahrensmerkmal ein Korrigieren des Takt-Zeitraums durch den Offset-Zeitraum mittels der Steuereinheit.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

Figur 1    ein bevorzugtes Ausführungsbeispiel einer elektrischen Antriebseinheit;

Figur 2    ein erstes Diagramm, welches die Funktion der Steuereinheit repräsentiert;

Figur 3    ein zweites Diagramm, welches die Funktion der Steuereinheit repräsentiert; und

Figur 4    ein drittes Diagramm, welches die Funktion der Steuereinheit repräsentiert.

## Ausführungsbeispiele:

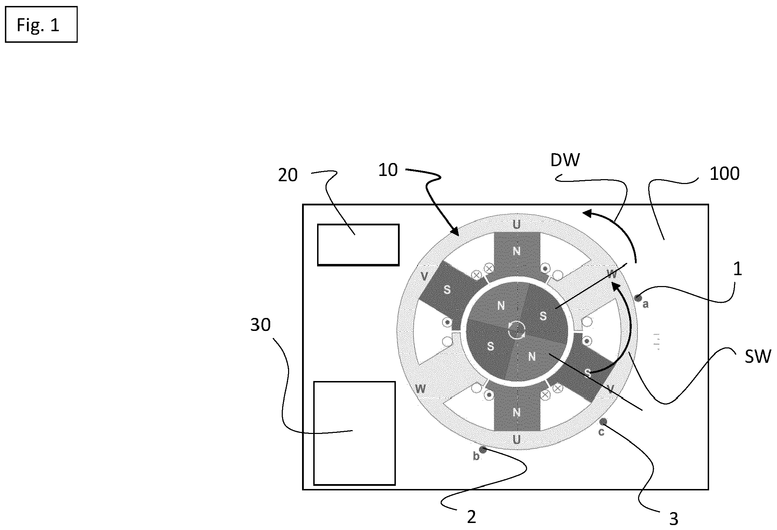

Fig. 1 zeigt, in stark schematisierter Form, ein bevorzugtes Ausführungsbeispiel einer erfindungsgemäßen elektrischen Antriebseinheit 100. Die Antriebseinheit 100 ist ausgestattet mit einem bürstenlosen Gleichstrommotor 10, vorliegend in Form eines 3-phasigen Gleichstrommotors mit 3 Motorpolpaaren und drei Hallsensoren 1, 2, 3. Der Gleichstrommotor 10 weist einen konstanten motorspezifischen Sektorwinkel SW (Winkel zwischen benachbarten Stator-Elementen) von 60 Grad auf. Die Antriebseinheit 100 ist weiterhin ausgestattet mit einer Schaltbrücke 20 zur sensorgesteuerten Kommutierung des Gleichstrommotors 10. Die Schaltbrücke 20 ist mit den Hallsensoren 1, 2, 3 elektrisch verbunden, wodurch der Gleichstrommotor 10, in Abhängigkeit vom Drehwinkel DW, kommutiert werden kann. Bei einer vollen Umdrehung des Gleichstrommotors 10 um einen Drehwinkel DW von 360 Grad (eine mechanische Rotation), werden zwei elektrische Zyklen durchlaufen, in denen die hier nicht dargestellten sechs Schalter der Schaltbrücke 20 sechsmal schalten, d.h. es erfolgt für jede 30 Grad mechanische Rotation eine Schaltzustandsänderung in der Schaltbrücke 20. Für jede 60 Grad mechanische Rotation ändert einer der Hallsensoren 1, 2, 3 seinen Schaltzustand.

Die Antriebseinheit 100 ist weiterhin ausgestattet mit einer Steuereinheit 30, mittels der eine Soll-Drehzahl für den Gleichstrommotor 10 vorgegeben werden kann. Eine typische Soll-Drehzahl für eine elektrische Antriebseinheit 100 einer hier nicht dargestellten elektrischen Handwerkzeugmaschine liegt im Normalbetrieb bei über 5.000 U/min, insbesondere über 6.000 U/min, besonders bevorzugt über 8.000 U/min.

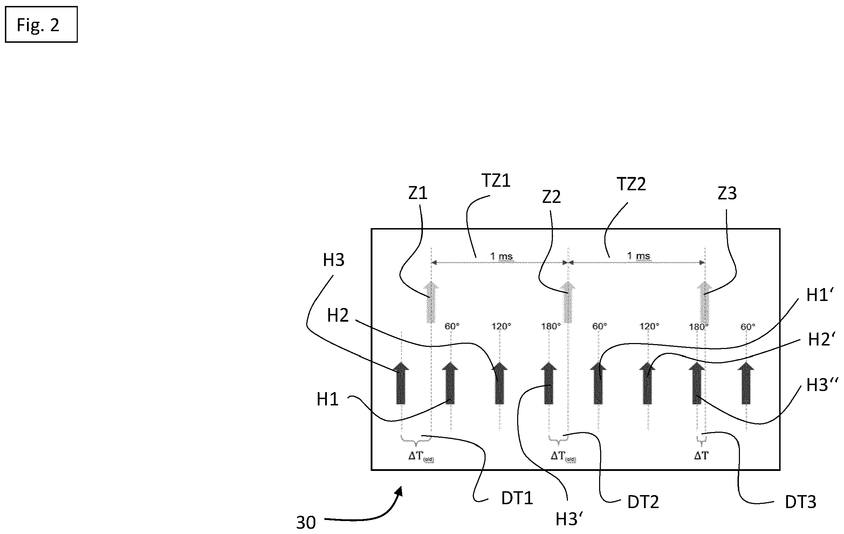

Die Steuereinheit 30 ist eingerichtet, drehwinkelabhängige Hall-Interrupts H1...H3 (vgl. Fig. 2 - 4), die durch die drei Hallsensoren 1, 2, 3 bewirkt werden, zu verarbeiten und auf Basis von drehwinkelunabhängigen Zeit-Interrupts Z1...Z3 (vgl. Fig. 2 - 4) und den drehwinkelabhängigen Hall-Interrupts H1...H3 eine Ist-Drehzahl des Gleichstrommotors 10 zu ermitteln.

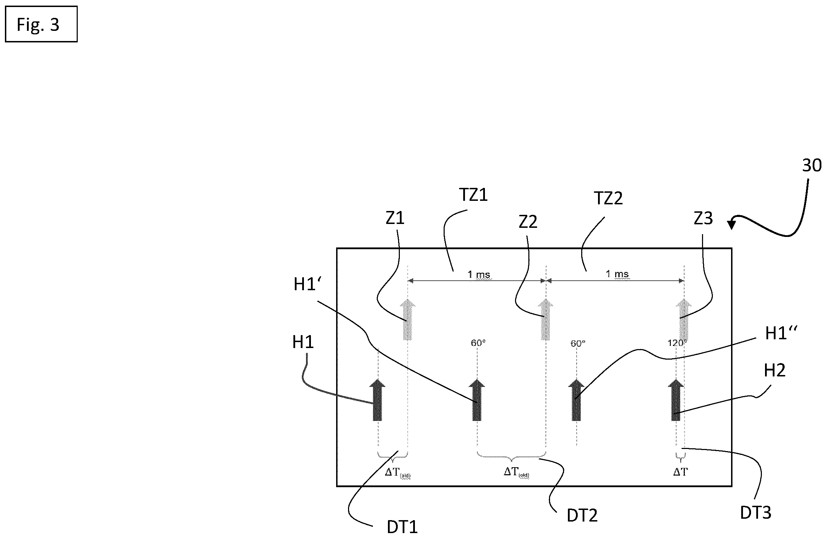

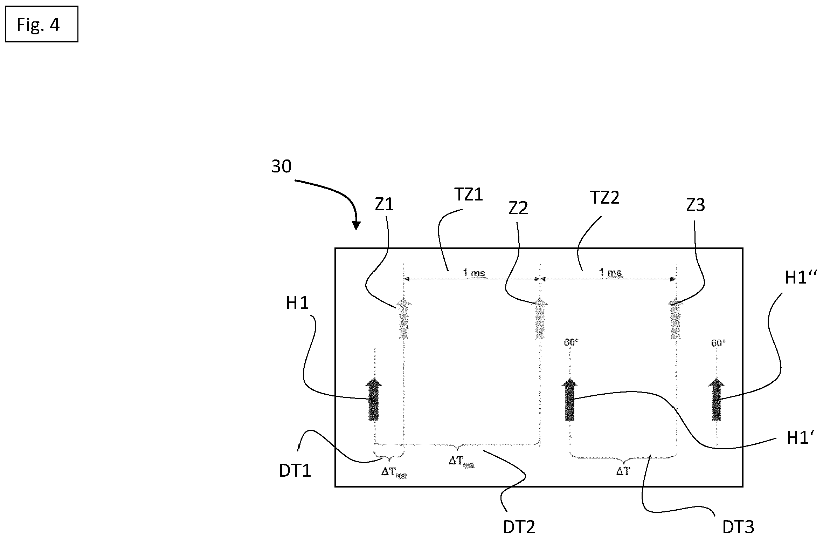

Dies soll beispielhaft mit Bezug auf die Fig. 2 - 4 erläutert werden, die jeweils ein die Funktion der Steuereinheit 30 der Fig. 1 erläuterndes Diagramm zeigen. Dabei symbolisiert Fig. 2 die Funktion der Steuereinheit 30 bei einer Ist-Drehzahl des Gleichstrommotors 10 von deutlich über 5000 U/min, Fig. 3 die Funktion der Steuereinheit 30 bei einer Ist-Drehzahl des Gleichstrommotors 10 von etwa 5000 U/min, und die Fig. 4 die Funktion der Steuereinheit 30 bei einer Ist-Drehzahl des Gleichstrommotors 10 von deutlich unter 5000 U/min. Die Steuereinheit 30 ist beispielhaft eingerichtet, die Zeit-Interrupts Z1...Z3 mit einer konstanten Taktfrequenz von 1 kHz zu erzeugen, d.h. jede Millisekunde wir ein neuer Zeit-Interrupt erzeugt.

Die Zeit-Interrupts Z1...Z3 sind drehwinkelunabhängig, d.h. nicht abhängig von der Ist-Drehzahl und/oder von dem Drehwinkel des Gleichstrommotors 10. Daher ist in allen Fig. 2 - 4 der erste Taktzeitraum TZ1, der durch den zweiten Zeit-Interrupt Z2 und den ersten Zeit-Interrupt Z1 aufgespannt ist, sowie der zweite Taktzeitraum TZ2, durch den dritten Zeit-Interrupt Z3 und den zweiten Zeit-Interrupt Z2 aufgespannt ist, jeweils gleich groß.

Wie bereits erwähnt symbolisiert Fig. 2 die Funktion der Steuereinheit 30 bei einer Ist-Drehzahl des Gleichstrommotors 10 von deutlich über 5000 U/min. Die Hall-Interrupts H1...H3 treten mit hoher Frequenz auf, da die mechanische Rotation des Gleichstrommotors 10 in einer Millisekunde höher ist, als die "elektrische Rotation" (für jede 60 Grad mechanische Rotation ändert einer der Hallsensoren 1, 2, 3 seinen Schaltzustand).

Die Steuereinheit 30 ist ausgebildet, zunächst zu zählen, wie viele der Hall-Interrupts H1...H3 in einem jeweiligen Takt-Zeitraum TZ1, TZ2 auftreten. Im Bespiel der Fig. 2 sind dies genau drei Hall-Interrupts H1...H3 im ersten Takt-Zeitraum TZ1 und genau drei Hall-Interrupts H1...H3 im zweiten Takt-Zeitraum TZ2. Dabei entspricht die Ist-Drehzahl des Gleichstrommotors 10 dem Quotienten aus gezählten Hall-Interrupts H1...H3, die den Drehwinkel DW repräsentieren, und einem jeweiligen Takt-Zeitraum TZ1, TZ2.

Zusätzlich ist die Steuereinheit 30 ausgebildet, den Takt-Zeitraum TZ1 durch einen Offset-Zeitraum DT1 zeitlich zu korrigieren. Offset-Zeitraum ist der Zeitraum zwischen demjenigen Hall-Interrupt, der einem Zeit-Interrupt unmittelbar zeitlich nacheilt, und diesem Zeit-Interrupt selbst. Im zeitlichen Verlauf der Fig. 2 werden demnach drei Offset-Zeiträume DT1 ...DT3 bestimmt. Ein erster Offset-Zeitraum DT1 ist aufgespannt zwischen dem ersten Zeit-Interrupt Z1 und dem zeitlich unmittelbar nacheilenden Hall-Interrupt H3, ein zweiter Offset-Zeitraum DT2 zwischen dem zweiten Zeit-Interrupt Z2 und dem zeitlich unmittelbar nacheilenden Hall-Interrupt H3', und ein dritter Offset-Zeitraum DT3 zwischen dem dritten Zeit-Interrupt Z3 und dem zeitlich unmittelbar nacheilenden dritten Hall-Interrupt H3".

Die Steuereinheit 30 ist weiterhin ausgebildet ist, den Takt-Zeitraum zusätzlich durch den jeweils vorangehenden Offset-Zeitraum zu korrigieren. Im konkreten Beispiel der Fig. 2 wird der aktuelle (d.h. im Diagramm der Fig. 2 am weitesten rechtsstehende) dritte Offset-Zeitraum DT3, und der diesem vorangehende zweite Offset-Zeitraum DT2 für die Korrektur des aktuellen, zweiten Takt-Zeitraum TZ2 berücksichtigt. Ein aktueller Bezugszeitraum BZ für den Takt-Zeitraum TZ2 wird berechnet durch die Formel:

$$BZ = TZ2 + DT2 - DT3.$$

In jedem Takt-Zeitraum wird also der jeweils aktuelle Bezugszeitraum BZ erneut berechnet, wobei der aktuelle (hier dritte) Offset-Zeitraum DT3 als vorangehender Wert abgespeichert wird. Bezogen auf den zeitlichen Verlauf der Fig. 2 ergibt sich somit folgende Berechnungsvorschrift für den ersten Takt-Zeitraum TZ1, der dem zweiten Takt-Zeitraum TZ2 vorangeht:

$$BZ = TZ1 + DT1 - DT2.$$

Die Ist-Drehzahl DZ des Gleichstrommotors 10 kann berechnet werden durch die Formel:

$$DZ = DW \ (H1...H3) \ / \ BZ,$$

Wobei *DW (H1...H3)* demjenigen Drehwinkel entspricht, der durch die drei Hall-Interrupts H1...H3 im jeweiligen Takt-Zeitraum repräsentiert wird. Die drei Hall-Interrupts H1...H3 entsprechen, bezogen auf das Ausführungsbeispiel der Fig. 1, einem Drehwinkel DW von 180 Grad (dies entspricht einem dreifachen Sektorwinkel des Gleichstrommotors von 60 Grad).

Fig. 3 symbolisiert die Funktion der Steuereinheit 30 bei einer Ist-Drehzahl des Gleichstrommotors 10 von etwa 5000 U/min. Bei dieser Drehzahl entspricht die Frequenz der Hall-Interrupts etwa der Frequenz der Zeit-Interrupts. Mit anderen Worten tritt in einem Takt-Zeitraum unter Umständen nur ein Hall-Interrupt auf, wie beispielsweise der einzige Hall-Interrupt H1' im ersten Takt-Zeitraum TZ1. Die mit Bezug auf Fig. 2 beschriebene Berechnungsvorschrift kann ebenfalls zum Einsatz kommen.

Ein erster Offset-Zeitraum DT1 ist aufgespannt zwischen dem ersten Zeit-Interrupt Z1 und dem zeitlich unmittelbar nacheilenden Hall-Interrupt H1, ein zweiter Offset-Zeitraum DT2 zwischen dem zweiten Zeit-Interrupt Z2 und dem zeitlich unmittelbar nacheilenden Hall-Interrupt H1', und ein dritter Offset-Zeitraum DT3 zwischen dem dritten Zeit-Interrupt Z3 und dem zeitlich unmittelbar nacheilenden Hall-Interrupt H2. Ein aktueller Bezugszeitraum BZ für den Takt-Zeitraum TZ2 wird berechnet durch die Formel:

$$BZ = TZ2 + DT2 - DT3.$$

In jedem Takt-Zeitraum wird also der jeweils aktuelle Bezugszeitraum BZ erneut berechnet, wobei der aktuelle (hier dritte) Offset-Zeitraum DT3 als vorangehender Wert abgespeichert wird. Bezogen auf den zeitlichen Verlauf der Fig. 3 ergibt sich somit folgende Berechnungsvorschrift für den ersten Takt-Zeitraum TZ1, der dem zweiten Takt-Zeitraum TZ2 vorangeht:

$$BZ = TZ1 + DT1 - DT2.$$

Die Ist-Drehzahl DZ des Gleichstrommotors 10 kann berechnet werden durch die Formel:

$$DZ = DW\,(H1...H2)\,/\,BZ,$$

Wobei *DW (H1...H2)* demjenigen Drehwinkel entspricht, der durch den einen Hall-Interrupt H1' im ersten Takt-Zeitraum TZ1 bzw. durch die zwei Hall-Interrupts H1", H2 im Taktzeitraum TZ2 repräsentiert wird. Der Hall-Interrupt H1' entspricht, bezogen auf das Ausführungsbeispiel der Fig. 1, einem Drehwinkel DW von 60 Grad. Die Hall-Interrupts H1", H2 entsprechen, bezogen auf das Ausführungsbeispiel der Fig. 1, einem Drehwinkel DW von 120 Grad (dies entspricht einem doppelten Sektorwinkel des Gleichstrommotors von 60 Grad).

Fig. 4 symbolisiert die Funktion der Steuereinheit 30 bei einer Ist-Drehzahl des Gleichstrommotors 10 von deutlich unter 5000 U/min. Bei dieser Drehzahl ist die Frequenz der Hall-Interrupts deutlich geringer als die Frequenz der Zeit-Interrupts. Mit anderen Worten tritt in einem Takt-Zeitraum unter Umständen kein Hall-Interrupt auf, wie beispielsweise im ersten Takt-Zeitraum TZ1. Die mit Bezug auf Fig. 2 und 3 beschriebene Berechnungsvorschrift kann daher für ersten Takt-Zeitraum TZ1 nicht zum Einsatz kommen.

Demensprechend ist die Steuereinheit 30 vorteilhafterweise ausgebildet, die ermittelte Ist-Drehzahl des Gleichstrommotors als Quotient von einem konstanten motorspezifischen Sektorwinkel SW und dem Offset-Zeitraum DT1 festzulegen, falls der jeweilige Takt-Zeitraum (Takt-Zeitraum DT1 in Fig. 4) frei von einem Hall-Interrupt ist.

Die Ist-Drehzahl DZ des Gleichstrommotors 10 im Takt-Zeitraum TZ1 kann berechnet werden durch die Formel:

$$DZ = SW\,/\,DT1.$$

Bezogen auf das Ausführungsbeispiel der Fig. 1 beträgt der Sektorwinkel SW des Gleichstrommotors 60 Grad).

Die Ist-Drehzahl DZ des Gleichstrommotors 10 im Takt-Zeitraum TZ1 kann berechnet werden durch die Formel:

$$DZ = DW\,(H1')\,/\,BZ$$

Der Hall-Interrupt H1' entspricht, bezogen auf das Ausführungsbeispiel der Fig. 1, einem Drehwinkel DW von 60 Grad. Ein aktueller Bezugszeitraum BZ für den Takt-Zeitraum TZ2 wird berechnet durch die Formel:

$$BZ = TZ2 + DT2 - DT3.$$

## Bezuaszeichenliste

| 1, 2, 3 | Hallsensor |
|---|---|
| 10 | Gleichstrommotor |
| 20 | Schaltbrücke |
| 30 | Steuereinheit |
| 100 | Elektrische Antriebseinheit |

| BZ | Bezugszeitraum |
|---|---|
| DW | Drehwinkel |
| DT1...DT3 | Offset-Zeitraum |
| DZ | Ist-Drehzahl |
| H1...H3 | Hall-Interrupts |
| SW | Sektorwinkel |
| TZ1, TZ2 | Takt-Zeitraum |
| Z1...Z3 | Zeit-Interrupt |

## Patentansprüche

1. Elektrische Antriebseinheit (100) mit einem bürstenlosen Gleichstrommotor (10) und mit einer Schaltbrücke (20) zur sensorgesteuerten Kommutierung des Gleichstrommotors (10) mittels wenigstens eines vom Gleichstrommotor (10) umfassten Hallsensors (1), wobei der Hallsensor (1) mit der Schaltbrücke (20) verbunden und eingerichtet ist, einen Drehwinkel (DW) des Gleichstrommotors (10) zu erfassen, und wobei die Antriebseinheit (100) weiter eine mit der Schaltbrücke (20) verbundene Steuereinheit (30) aufweist, mittels der eine Soll-Drehzahl für den Gleichstrommotor (10) vorgegeben werden kann, **dadurch gekennzeichnet, dass** die Steuereinheit (30) eingerichtet ist, drehwinkelabhängige Hall-Interrupts (H1...H3), die durch den wenigsten einen Hallsensor (1) bewirkt werden, zu verarbeiten und auf Basis von drehwinkelunabhängigen Zeit-Interrupts (Z1...Z3) und den drehwinkelabhängigen Hall-Interrupts (H1...H3) eine Ist-Drehzahl (DZ) des Gleichstrommotors (10) zu ermitteln.

2. Antriebseinheit (100) nach Anspruch 1, **dadurch gekennzeichnet, dass** die Steuereinheit (30) ausgebildet ist, zu zählen, wie viele der Hall-Interrupts (H1...H3) in einem Takt-Zeitraum (TZ1; TZ2), der durch zwei aufeinander folgende Zeit-Interrupts (Z1, Z2; Z2, Z3) definiert ist, auftreten, wobei die ermittelte Ist-Drehzahl des Gleichstrommotors (10) dem Quotienten aus gezählten Hall-Interrupts (H1...H3), die den Drehwinkel (DW) repräsentieren, und dem Takt-Zeitraum (TZ1; TZ2) entspricht.

3. Antriebseinheit (100) nach Anspruch 2, **dadurch gekennzeichnet, dass** die Steuereinheit (30) ausgebildet ist, jeweils einen Offset-Zeitraum (DT1) zwischen demjenigen Hall-Interrupt (H3), der einem Zeit-Interrupt (Z1) unmittelbar zeitlich nacheilt, und diesem Zeit-Interrupt (Z1) zu bestimmen.

4. Antriebseinheit (100) nach Anspruch 3,
**dadurch gekennzeichnet, dass** die Steuereinheit (30) ausgebildet ist, den Takt-Zeitraum (TZ1) durch den Offset-Zeitraum (DT1) zeitlich zu korrigieren.

5. Antriebseinheit (100) nach Anspruch 4,
**dadurch gekennzeichnet, dass** die Steuereinheit (30) ausgebildet ist, den Takt-Zeitraum (TZ1) zusätzlich durch den jeweils vorangehenden Offset-Zeitraum (DT2) zu korrigieren.

6. Antriebseinheit (100) nach einem der Ansprüche 2 bis 5,
**dadurch gekennzeichnet, dass** die Steuereinheit (30) ausgebildet ist, die ermittelte Ist-Drehzahl (DZ) des Gleichstrommotors (10) als Quotient von einem konstanten motorspezifischen Sektorwinkel (SW) und dem Offset-Zeitraum (DT1) festzulegen, falls der Takt-Zeitraum (DT2) frei von einem Hall-Interrupt ist.

7. Antriebseinheit (100) nach einem der vorangehenden Ansprüche,
**dadurch gekennzeichnet, dass** der Zeit-Interrupt (Z1...Z3) eine konstante Taktfrequenz aufweist.

8. Antriebseinheit (100) nach Anspruch 7,
**dadurch gekennzeichnet, dass** die Taktfrequenz zwischen 0,5 kHz und 1,5 kHz liegt und bevorzugt 1 kHz beträgt.

9. Antriebseinheit (100) nach einem der vorangehenden Ansprüche,
**dadurch gekennzeichnet, dass** die Schaltbrücke (20) zur Blockkommutierung des Gleichstrommotors (10) ausgebildet ist.

10. Antriebseinheit (100) nach einem der vorangehenden Ansprüche,
**dadurch gekennzeichnet, dass** die Antriebseinheit (100) Teil einer elektrischen Handwerkzeugmaschine, insbesondere eines Akkuschraubers, eines Bohrhammers, oder eines Kombihammers ist.

11. Verfahren zum Bestimmen der Ist-Drehzahl eines bürstenlosen Gleichstrommotors einer elektrischen Antriebseinheit, wobei die Antriebseinheit ausgestattet ist mit einem bürstenlosen Gleichstrommotor, einer Schaltbrücke zur sensorgesteuerten Kommutierung des Gleichstrommotors mittels wenigstens eines vom Gleichstrommotor umfassten Hallsensors, wobei der Hallsensor mit der Schaltbrücke verbunden und eingerichtet ist, einen Drehwinkel des Gleichstrommotors zu erfassen, und wobei die Antriebseinheit weiter eine mit der Schaltbrücke verbundene Steuereinheit aufweist, mittels der eine Soll-Drehzahl für den Gleichstrommotor vorgegeben werden kann,
**dadurch gekennzeichnet, dass** die Ist-Drehzahl des Gleichstrommotors auf Basis von drehwinkelunabhängigen Zeit-Interrupts und drehwinkelabhängigen Hall-Interrupts ermittelt wird, wobei die Steuereinheit eingerichtet ist, die drehwinkelabhängige Hall-Interrupts, die durch den wenigsten einen Hallsensor bewirkt werden, zu verarbeiten.

Fig. 1

Fig. 2

Fig. 3

Fig. 4

**Europäisches Patentamt**
**European Patent Office**
**Office européen des brevets**

# EUROPÄISCHER RECHERCHENBERICHT

**Nummer der Anmeldung**

EP 21 17 6289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | EP 1 087 232 A1 (PAPST MOTOREN GMBH & CO KG [DE]) 28. März 2001 (2001-03-28)<br>* Absätze [0015], [0028], [0035]; Abbildungen 3,7 *<br>----- | 1-5,7,<br>10,11<br>8-10<br>6 | INV.<br>H02P6/17<br>H02P23/00 |
| Y | Jorge Zambada: "Sinusoidal Control of PMSM Motors with dsPIC30F DSC",<br>,<br>31. Oktober 2005 (2005-10-31), XP055507372,<br>Gefunden im Internet:<br>URL:http://ww1.microchip.com/downloads/en/AppNotes/01017A.pdf<br>[gefunden am 2018-09-17]<br>* Seite 10, Zeile 2 *<br>----- | 8 | |
| A | KR 2016 0007780 A (SAMSUNG ELECTRONICS CO LTD [KR]) 21. Januar 2016 (2016-01-21)<br>* Abbildung 8 *<br>----- | 4,5 | |
| Y | DE 198 45 626 A1 (PAPST MOTOREN GMBH & CO KG [DE]) 6. April 2000 (2000-04-06)<br>* Absatz [0039] *<br>----- | 9 | **RECHERCHIERTE SACHGEBIETE (IPC)**<br><br>H02P |
| Y | US 2018/367070 A1 (ICHIKAWA YOSHITAKA [JP]) 20. Dezember 2018 (2018-12-20)<br>* Abbildungen 1,2 *<br>----- | 10 | |
| X | US 2004/081438 A1 (HAHN ALEXANDER [DE] ET AL) 29. April 2004 (2004-04-29)<br>* Absatz [0337]; Abbildungen 1,11,21 *<br>----- | 11 | |

Der vorliegende Recherchenbericht wurde für alle Patentansprüche erstellt

| Recherchenort | Abschlußdatum der Recherche | Prüfer |
|---|---|---|
| München | 25. Oktober 2021 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 6289

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2021

| Im Recherchenbericht angeführtes Patentdokument | Datum der Veröffentlichung | Mitglied(er) der Patentfamilie | Datum der Veröffentlichung |
|---|---|---|---|
| EP 1087232 A1 | 28-03-2001 | AT 383581 T<br>DE 10036839 A1<br>EP 1087232 A1<br>US 6496786 B1 | 15-01-2008<br>12-04-2001<br>28-03-2001<br>17-12-2002 |
| KR 20160007780 A | 21-01-2016 | KEINE | |
| DE 19845626 A1 | 06-04-2000 | AT 284580 T<br>AU 5287099 A<br>CA 2346118 A1<br>DE 19845626 A1<br>EP 1118152 A1<br>JP 4618890 B2<br>JP 2002528029 A<br>US 7230400 B1<br>WO 0021189 A1 | 15-12-2004<br>26-04-2000<br>13-04-2000<br>06-04-2000<br>25-07-2001<br>26-01-2011<br>27-08-2002<br>12-06-2007<br>13-04-2000 |
| US 2018367070 A1 | 20-12-2018 | CN 109150031 A<br>DE 102018113727 A1<br>JP 6901329 B2<br>JP 2019004614 A<br>US 2018367070 A1 | 04-01-2019<br>20-12-2018<br>14-07-2021<br>10-01-2019<br>20-12-2018 |
| US 2004081438 A1 | 29-04-2004 | AT 408927 T<br>AU 1385302 A<br>CA 2421129 A1<br>DE 10141125 A1<br>EP 1314242 A1<br>US 2004081438 A1<br>WO 0219512 A1 | 15-10-2008<br>13-03-2002<br>28-02-2003<br>06-06-2002<br>28-05-2003<br>29-04-2004<br>07-03-2002 |

EPO FORM P0461

Für nähere Einzelheiten zu diesem Anhang : siehe Amtsblatt des Europäischen Patentamts, Nr.12/82